# EUROPÄISCHE PATENTSCHRIFT

(11) **EP 1 539 388 B1**
(45) Veröffentlichungstag und Bekanntmachung des Hinweises auf die Patenterteilung: **15.11.2006**
(21) Anmeldenummer: 03744334.8
(22) Anmeldetag: 22.02.2003
(51) Int. Cl.: B21B 31/07

(54) **DICHTUNGSVORRICHTUNG MIT EINEIM ZWEITEILIGEN RINGKÖRPER**
SEALING DEVICE COMPRISING A TWO-PIECE ANNULAR BODY
DISPOSITIF D'ETANCHEITE COMPRENANT UN CORPS ANNULAIRE CONSTITUE DE DEUX PARTIES

(30) Priorität: 15.03.2002 DE 10211665
(43) Veröffentlichungstag der Anmeldung: 15.06.2005
(73) Patentinhaber: SMS Demag Aktiengesellschaft, 40237 Düsseldorf (DE)
(72) Erfinder: ROEINGH, Konrad, 57271 Hilchenbach (DE); KELLER, Karl, 57271 Hilchenbach (DE)
(74) Vertreter: Valentin, Ekkehard
(86) Internationale Anmeldenummer: PCT/EP2003/001815
(87) Internationale Veröffentlichungsnummer: WO 2003/078085

(56) Entgegenhaltungen:
- EP-A- 1 038 601
- US-A- 4 099 731
- PATENT ABSTRACTS OF JAPAN vol. 2000, no. 24, 11. Mai 2001 (2001-05-11) & JP 2001 205314 A (NOK CORP), 31. Juli 2001 (2001-07-31)

## Beschreibung

Die Erfindung betrifft eine Dichtungsvorrichtung für eine drehbar gelagerte Walze nach dem Oberbegriff des Anspruchs 1. Eine solche vorrichtung ist aus US 4 099 731A bekannt.

Walzvorrichtungen der genannten Art finden sich etwa in Walzwerken der Stahl-und Nichteisenmetall-Industrie. Sie umfassen Dichtvorrichtungen im Bereich der Lagerung der lasttragenden Walze(n).

Die Dichtungsvorrichtungen dienen dabei zur Abdichtung von drehbar gelagerten Walzen und sind nahe den Walzenlagern den Walzenzapfen, die in axial äußeren Bereichen angeordnet sind, zugeordnet. Die Abdichtung kann sowohl gegen Übertritt von Schmiermittel aus dem Lager z.B. einem Ölfilmlager zum Walzenballen als auch gegen Übertritt von Kühlmittel, das teilweise mit Sinter versetzt ist, zum Lager hin wirken. Dabei gibt es Dichtungsvorrichtungen, die stationär an einem Einbaustück angeordnet sind und Dichtlippen aufweisen, die mit ihren freien Enden an den im Betrieb rotierenden Walzenzapfen anliegen. In vielen Fällen werden inzwischen solche Dichtungsvorrichtungen verwendet, die umgekehrt mit dem Walzenzapfen mitrotierende Dichtlippen aufweisen, wobei diese Dichtlippen mit ihren freien Enden unter Unterstützung der Zentrifugalkraft gegen das stationäre Gegenstück gepreßt werden, um die Dichtwirkung zu verbessern. Derartige Dichtungsvorrichtungen werden häufig als X- oder DF-Dichtungssysteme bezeichnet.

Es ergeben sich dabei für den an der jeweiligen Walze anliegenden Teil der Dichtung hohe Stabilitätsanforderungen, ein Abheben dieses Teils muß in jedem Fall vermieden werden. Die Dichtlippen hingegen erfordern eine hohe Elastizität, durch welche die Anlage an dem stationären Gegenstück jederzeit gewährleistet werden muß. Gleichzeitig soll jedoch die Oberfläche eine hinreichende Härte aufweisen, um ein Verschleißen trotz der auftretenden Relativbewegung weitgehend zu vermeiden.

Der Erfindung liegt die Aufgabe zugrunde, Dichtvorrichtungen und Walzvorrichtungen im Hinblick auf diese Anforderungen zu optimieren.

Die Erfindung löst diese Aufgabe durch eine Dichtungsvorrichtung mit den Merkmalen des Anspruchs 1. Hinsichtlich vorteilhafter Ausgestaltungen wird auf die abhängigen Ansprüche 2 bis 8 verwiesen.

Erfindungsgemäß ist mit der mehrteiligen Ausbildung des mit der Walze rotierenden Dichtungsteils eine Berücksichtigung der geschilderten unterschiedlichen Anforderungen innerhalb der Dichtungsvorrichtung erreicht.

Wenn besonders vorteilhaft die Materialeigenschaften bezüglich Härte und/oder Elastizität zwischen den Teilen variieren, können gerade diese kritischen Parameter jeweils optimiert eingestellt werden.

Eine besondere mechanische Stabilität kann dann erreicht werden, wenn der zweite, den oder die Lippen tragende Teil in einer Tasche des ersten, an dem Walzenzapfen anliegenden Teil aufgenommen ist.

Für die Abdichtung ist es weiterhin besonders günstig, wenn mindestens zwei Lippen vorgesehen sind, von denen eine auswärts und eine einwärts weist.

Zudem können die Lippe/ Lippen bei einer gesonderten Federbeaufschlagung hinsichtlich ihres Anpreßdruckes an den stationären Teil optimiert werden.

Weitere Vorteile und Merkmale der Erfindung ergeben sich aus einem in der Zeichnung dargestellten und nachfolgend beschriebenen Ausführungsbeispiel des Gegenstandes der Erfindung.

In der Zeichnung zeigt:
- Fig. 1: eine nach dem Stand der Technik abgedichtete Walze in schnittbildlicher Ansicht mit hervorgehobenem Detail der herkömmlichen Dichtungsvorrichtung, die einen mit der Walze rotierenden Teil als Träger von Dichtungslippen aufweist, und

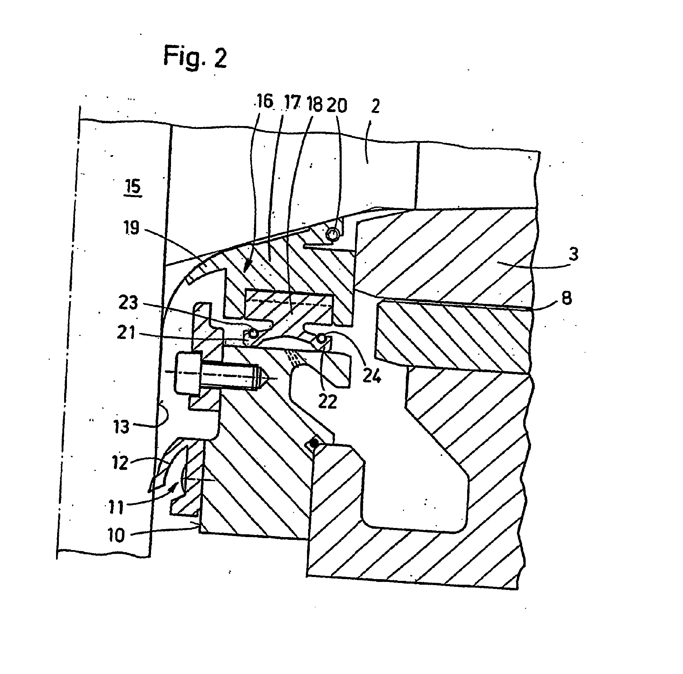

- Fig. 2: eine Schnittansicht der erfindungsgemäßen Dichtungsvorrichtung,

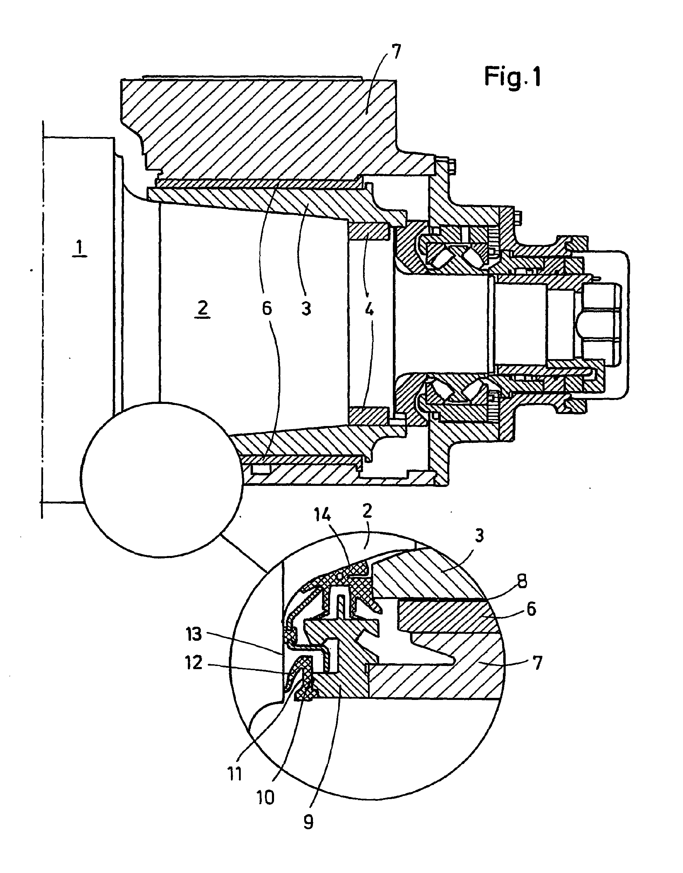

Gemäß dem Stand der Technik (Figur 1) werden in Walzvorrichtungen gehaltene Walzen 1, von denen hier nur die axial randseitigen Lagerzapfen 2 näher dargestellt sind, derart ausgebildet, daß die Lagerzapfen 2 jeweils in diese umgreifende Zapfenbuchsen 3 eingepreßt sind. Zur Sicherung der Zapfenbuchsen 3 auf den Lagerzapfen 2 können dabei Paßfedern 4 vorgesehen sein.

Die Zapfenbuchsen 3 sind in Lagerbuchsen 6 drehbar gehalten, wobei diese wiederum in radial außen liegenden sog. Einbaustücken 7 gehalten sind.

Zwischen den Zapfenbuchsen 3 und den Lagerbuchsen 6 liegt eine Schmierung vor, wobei ein Flüssigschmiermittel 8, etwa ein Öl, eingezeichnet ist.

An die Einbaustücke 7 schließt sich axial in Richtung zum Ballen der Walze 1 jeweils ein innerer Abschlußdeckel 9 an, der auf seiner dem Ballen der Walze 1 zugewandten Stirnfläche 10 einen Kühlmittelabweiser 11 abstützt. Der Kühlmittelabweiser 11 weist einen federnden Ausleger 12 auf, der mit seinem freien Ende im Betrieb auf einer axial auswärts weisenden Stirnfläche 13 des Lagerzapfens 2 abläuft. Zudem ist eine mit dem Walzenzapfen 2 umlaufende Dichtung 14 vorgesehen, die einstückig ausgebildet ist.

Im Ausführungsbeispiel der Erfindung ist beispielhaft eine insgesamt mit 15 bezeichnete Walze dargestellt, die an sich und bezüglich der - bis auf die Lagerbuchsen 3 und das Schmiermittel 8 - feststehenden Teile 2 bis 13 den in Figur 1 zum Stand der Technik gezeigten Bauteilen 1 bis 13 prinzipiell entspricht.

An Stelle der Dichtung 14 ist erfindungsgemäß die Dichtungsvorrichtung 16 vorgesehen, die zumindest zwei mit der Walze 15 rotierende Teile 17 und 18 umfaßt.

Der Teil 17 liegt dabei am Lagerzapfen 2 an und weist hierfür einen der Verlaufsrichtung des Lagerzapfens 2 folgenden und sich hieran anschmiegenden Flügel 19 auf. Dadurch wird eine gegen Abheben der Dichtungsvorrichtung 16 vom Lagerzapfen 2 gesicherte Anlage erreicht. Der Lagerzapfen 2 kann verschiedenste Durchmesser haben.

Der erste Dichtungsteil 17 besteht beispielsweise aus dem Material NM 74/70 oder 80. Er kann von dem Spannring 20 auf dem Walzenzapfen 2 verspannt sein.

Der zweite Teil 18 besteht aus einem hinsichtlich seiner Elastizität und Oberflächenhärte anderen Werkstoff, etwa einem anderen Gummiwerkstoff. Damit kann eine bleibende Dauerelastizität insbesondere der zum zweiten Teil 18 gehörenden Dichtlippen 21, 22, die nach bisheriger Ausbildung schnell verschlissen waren, sichergestellt werden. Hierfür ist eine hohe Elastizität des Teils 18, verbunden mit einer großen Oberflächenhärte - insbesondere der Lippen 21, 22, die in reibendem Kontakt zum Einbaustück 7 stehen - vorteilhaft.

Sofern zwei Lippen 21 und 22, die axial in gegenläufige Richtungen weisen, ist eine hohe Dichtwirkung gewährleistet. Beide Dichtlippen 21 und 22 können dabei durch eingesetzte Federn 23 und 24 in ihrem Anpreßdruck an das Einbaustück 7 oder ein anderes stationäres Widerlager unterstützt sein. Eine hohe Außermittigkeit ist damit möglich. Die Dichtlippen 21 und 22 können etwa auch jeweils ein einzelnes äußeres Ringteil bilden und müssen nicht einstückig zusammenhängen.

Die mechanische Dauerhaltbarkeit ist weiterhin dadurch verbessert, daß der Teil 18 in einer Tasche des ersten, am Walzenzapfen 2 anliegenden Teils 17 aufgenommen ist. Insbesondere stützen die Wandungen der Tasche den Teil 18 gegen axial einwirkende Kräfte ab. Dadurch können auch axial auf die Dichtlippen 21, 22 einwirkende Kräfte abgefangen werden, ohne die Dichtlippen 21, 22 zu verschieben oder gar den Sitz der gesamten Dichtungsvorrichtung 16 zu gefährden.

Eine Walze 15 mit einer Dichtungsvorrichtung 16 kann insgesamt Bestandteil einer Walzvorrichtung sein, die etwa ein Mehr-Walzen-Gerüst mit mehreren Arbeitswalzen sowie mehreren Stützwalzen umfaßt. Auch die Ausbildung eines Walzen-Gerüsts mit zusätzlichen Zwischenwalzen zwischen den Arbeitswalzen und den Stützwalzen ist möglich.

Beanspruchter Bestandteil der Erfindung sind daher auch Walzvorrichtungen mit oben angeführten Dichtungsvorrichtungen in verschiedensten Anzahlen und geometrischen Anordnungen von Walzen.

### Bezugszeichenliste

- 1.: Walze,
- 2.: Lagerzapfen,
- 3.: Zapfenbuchsen,
- 4.: Paßfedern,
- 5.:
- 6.: Lagerbuchsen,
- 7.: Einbaustücke,
- 8.: Schmiermittel,
- 9.: Abschlußdeckel,
- 10.: Stirnfläche,
- 11.: Kühlmittelabweiser,
- 12.: Ausleger des Kühlmittelabweisers,
- 13.: Stirnfläche,
- 14.: Dichtung,
- 15.: Walze,
- 16.: Dichtungsvorrichtung,
- 17.: erstes Teil der Dichtungsvorrichtung,
- 18.: zweites Teil der Dichtungsvorrichtung,
- 19: Flügel des ersten Teils
- 20: Spannring,
- 21.: Lippe,
- 22.: Lippe,
- 23.: Feder,
- 24.: Feder.

## Patentansprüche

1. Dichtungsvorrichtung (16) für eine drehbar gelagerte Walze (15), mit zumindest einem auf einem Walzenzapfen (2) gehaltenen und diesen umgreifenden Ringkörper, der mit zumindest einer ausgreifenden und während der Walzenrotation an einem stationären Bauteil (7) dichtend anliegenden Lippe (21; 22) versehen ist, wobei der Ringkörper zumindest zweiteilig (17; 18) ausgebildet ist und ein erster Teil (17) an einem Bestandteil (2) der Walze (15) anliegt und ein zweiter Teil (18) zumindest eine ausgreifende Lippe (21; 22) umfaßt, **dadurch gekennzeichnet, daß** der zweite Teil (18) in einer Tasche des ersten Teils (17) aufgenommen ist.

2. Dichtungsvorrichtung nach Anspruch 1,
**dadurch gekennzeichnet,**
**daß** der erste (17) und der zweite Teil (18) unterschiedliche Elastizitätsmodule aufweisen.

3. Dichtungsvorrichtung nach einem der Ansprüche 1 oder 2,
**dadurch gekennzeichnet,**
**daß** der erste (17) und der zweite Teil (18) unterschiedliche Oberflächenhärten aufweisen.

4. Dichtungsvorrichtung nach einem der Ansprüche 1 bis 3,
**dadurch gekennzeichnet,**
**daß** der erste (17) und der zweite Teil (18) aus unterschiedlichen Materialien bestehen.

5. Dichtungsvorrichtung nach einem der Ansprüche 1 bis 4,
**dadurch gekennzeichnet ,**
**daß** der zweite Teil (18) zumindest eine axial in Richtung auf den Ballen der Walze (15) weisende Lippe (21) und eine axial von diesem weg weisende Lippe (22) umfaßt.

6. Dichtungsvorrichtung nach einem der Ansprüche 1 bis 5,
**dadurch gekennzeichnet,**
**daß** der oder die Lippen (21; 22) gummielastisch ausgebildet sind.

7. Dichtungsvorrichtung nach einem der Ansprüche 1 bis 6,
**dadurch gekennzeichnet,**
**daß** der oder die Lippen (21; 22) federunterstützt sind.

8. Walzvorrichtung mit zumindest einer in einem Gerüst drehbar gelagerten Walze (15) und mit zumindest einer die Walze gegen einen stationären Bereich (7) der Walzvorrichtung abdichtenden Dichtungsvorrichtung,
**dadurch gekennzeichnet,**
**daß** die Dichtungsvorrichtung (16) nach einem der Ansprüche 1 bis 7 ausgebildet ist.

## Claims

1. Sealing device (16) for a rotatably mounted roll (15), with at least one annular body, which is mounted on a roll pin (2) and engages around this and which is provided with at least one lip (21; 22), which extends out and which during the roll rotation sealingly bears against a stationary component (7), wherein the annular body is of at least two-part (17; 18) construction, a first part (17) bears against a component (2) of the roll (15) and a second part (18) comprises at least one lip (21; 22) extending out, **characterised in that** the second part (18) is received in a pocket of the first part (17).

2. Sealing device according to claim 1, **characterised in that** the first part (17) and the second part (18) have different moduli of elasticity.

3. Sealing device according to one of claims 1 and 2, **characterised in that** the first part (17) and the second part (18) have different surface hardnesses.

4. Sealing device according to one of claims 1 to 3, **characterised in that** the first part (17) and the second part (18) consist of different materials.

5. Sealing device according to one of claims 1 to 4, **characterised in that** the second part (18) comprises at least one lip (21) facing axially in direction towards the circumferential surface of the roll (15) and a lip (22) axially facing away from this.

6. Sealing device according to one of claim 1 to 5, **characterised in that** the lip or lips (21; 22) is or are of rubber-elastic construction.

7. Sealing device according to one of claims 1 to 6, **characterised in that** the lip or lips (21; 22) is or are spring-assisted.

8. Rolling device with at least one roll (15) rotatably mounted in a stand and at least one sealing device sealing the roll against a stationary region of the rolling device, **characterised in that** the sealing device (16) is constructed according to one of claims 1 to

## Revendications

1. Dispositif d'étanchéité (16) pour un cylindre (15) logé de manière rotative, présentant au moins un corps annulaire fixé sur un tourillon (2) de cylindre et entourant celui-ci, qui est pourvu d'au moins une lèvre (21 ; 22) ressortant vers l'extérieur et se plaçant de manière étanche pendant la rotation du cylindre contre une pièce stationnaire (7), le corps annulaire étant réalisé en au moins deux parties (17 ; 18) et la première partie (17) étant placée contre un constituant (2) du cylindre (15) et une deuxième partie (18) comprenant au moins une lèvre (21 ; 22) ressortant vers l'extérieur, **caractérisé en ce que** la deuxième partie (18) est placé dans une poche de la première partie (17).

2. Dispositif d'étanchéité selon la revendication 1, **caractérisé en ce que** la première partie (17) et la deuxième partie (18) présentent des modules d'élasticité différents.

3. Dispositif d'étanchéité selon l'une quelconque des revendications 1 ou 2, **caractérisé en ce que** la première partie (17) et la deuxième partie (18) présentent des duretés superficielles différentes.

4. Dispositif d'étanchéité selon l'une quelconque des revendications 1 à 3, **caractérisé en ce que** la première partie (17) et la deuxième partie (18) sont constituées par des matériaux différents.

5. Dispositif d'étanchéité selon l'une quelconque des revendications 1 à 4, **caractérisé en ce que** la deuxième partie (18) comprend au moins une lèvre (21) dirigée axialement vers la table du cylindre (15) et une lèvre (22) s'écartant axialement de celle-ci.

6. Dispositif d'étanchéité selon l'une quelconque des revendications 1 à 5, **caractérisé en ce que** la ou les lèvres (21 ; 22) sont en caoutchouc élastique.

7. Dispositif d'étanchéité selon l'une quelconque des revendications 1 à 6, **caractérisé en ce que** la ou les lèvres (21 ; 22) sont soutenues par un ressort.

8. Dispositif de laminage comprenant au moins un cylindre (15) logé de manière rotative dans une cage et présentant au moins un dispositif d'étanchéité fermant de manière étanche le cylindre contre une zone (7) stationnaire du dispositif de laminage, **caractérisé en ce que** le dispositif d'étanchéité (16) est réalisé selon l'une quelconque des revendications 1 à 7.
